(19) Europäisches Patentamt
European Patent Office
Office européen des brevets

(11) **EP 3 926 461 A1**

(12) **EUROPEAN PATENT APPLICATION**

(43) Date of publication:
**22.12.2021 Bulletin 2021/51**

(51) Int Cl.:
***G06F 7/53*** (2006.01)

(21) Application number: **20461542.1**

(22) Date of filing: **17.06.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Digital Core Design Sp. Z O.O. Sp. K.
41-902 Bytom (PL)**

(72) Inventors:
• **Hanke, Jacek
42-603 Tarnowskie Gory (PL)**
• **Jablonski, Janusz
65-557 Zielona Gora (PL)**
• **Krzyzak, Tomasz
42-622 Nowe Chechlo (PL)**

(74) Representative: **Kancelaria Eupatent.pl Sp. z.o.o
Ul. Kilinskiego 185
90-348 Lodz (PL)**

(54) **A DIGITAL 4-BIT MULTIPLYING CIRCUIT WITH ACCELERATED CALCULATION**

(57) A digital 4-bit multiplying circuit with accelerated calculation, comprising interconnected sets of logic circuits for determining a result of multiplication in three steps. The circuit is characterised by a small T parameter due to the use of a specific relationship between the values of input and output signals in the multiplier.

Fig. 4

**Description**

**TECHNICAL FIELD**

The object of the present invention is a digital circuit, composed of universal digital logic gates, which performs a four-bit in-circuit multiplication of two numbers in a binary code.

**BACKGROUND**

Multipliers are embedded in microprocessor digital circuits (Arithmetic Logic Unit, ALU) of medium-scale integration, such as the four-bit MC-10181 circuit from Motorola, and they also constitute a multiplication element in circuits dedicated to large-scale integration.

The four-bit multiplier according to the present invention is intended for in-circuit digital filters and microprocessors with an arithmetic logic unit (ALU) equipped with a fast multiplier.

Any digital circuit can be implemented as a combination of standard logic gates (AND, OR, NAND, NOR) in many different circuits. In order to compare the implementation of digital circuits based on different logic circuits, AT (Area-Time) characteristics related to networks of standard simple logic gates are used. A simple logic gate (AND, OR, NAND, NOR) performs simple logic operations of two input signals and its size is A=1, while the delay (measured as signal propagation time from input to output) is T=1. For a complex gate (XAND, XNAND, XOR, XNOR) A=2 and T=2. For the inverter (NOT), due to the features of CMOS technology, it is assumed that A=0 and T=0. To characterise the circuits implemented as a network of logic gate connections, the value of A determines the conversion number of logic gates occurring in the network of connections of the circuit, while the value of T determines the delay on the longest path from input to output, determined by the number of logic gates.

The multipliers can be implemented as a network of logic gate connections, and individual implementations of these circuits can be evaluated by comparing their AT parameters. Implementations of multipliers can be classified into one of three categories.

The first category performs multiplication as a sequential addition $Z = X * Y = \sum_{i=1}^{X} Y$ the use of a multi-position adder and an element which stores the result of successive partial sums. For 4--bit size of arguments of multiplication $X$ by $Y$, where $X=\{x_3, x_2, x_1, x_0\}$ and $Y=\{y_3, y_2, y_1, y_0\}$, and $(x_i, y_j)$ are values "0" or "1", 4-bit multiplication may require 15 addition operations if $Y=\sum_{j=0}^{n-1} 2^j * y_j$ is represented by $Y=\{1, 1, 1, 1\}$. Also, the maximum value may be $X = 15$, so the maximum value of the product of 4-bit arguments is 15*15=225 and the result is represented in $[\log_2 225] = 8$ bits. Therefore, 4-bit multiplication performed as a multiple addition must take into account the possibility of exceeding the 4-bit size of the result. Exceeding the 4-bit size of addition result may occur many times and for a 4-bit adder the result may exceed the range of the 4-bit adder already in the first addition operation. Consideration of the range exceeding is signalled by the occurrence of carry to an older bit position, which must be taken into account in the next addition. Time characteristics of sequential multiplication is proportional to the value of one of multiplication factors referred to as the multiplier. The T parameter for a 4-bit sequential multiplication would be 15 times the time resulting from the T characteristics of the 7-bit adder. In such a multiplication, the total time T described by the 7-bit adder characteristics of Ts = 16 would be T = 15 * 16 = 240 units. Sequential multiplication, due to the necessity to take into account the carries in successive additions and the adder with a bit size larger than the multiplication arguments, is ineffective and, being the slowest of the known multiplication implementations, is not applicable in systems requiring fast multiplication.

The second category of digital multipliers implements a written multiplication algorithm in matrix multiplication circuits. Matrix multiplication of 4-bit arguments comes down to determination of four partial products $\{a_3, a_2, a_1, a_0\}$, where $a_k = x_i * Y$, and determination of their sum

$$A = \sum_{k=0}^{n-1} 2^k * a_k = \sum_{i=0}^{n-1} (2^i * x_i * Y).$$

Each of the partial products requires taking into account its weight resulting from the multiplication $2^k * a_k$. Multiplying by 2 in a binary system is equivalent to a bit shift by one bit towards the bit position of a higher weight. Value of 4 represented in binary as $\{1,0,0\}$ when multiplied by 2 returns $2 * 4 = 8$, i.e. the result is represented in 4 bits as $\{1,0,0,0\}$. Multiplication matrix is composed of cascaded CSA (Carry-Save-Adder) circuits which simultaneously perform addition with possible carries and bit shift of partial products. The use of CSAs as identical logical blocks in a structure dedicated to matrix multiplication which performs simultaneous argument-sized addition and carry accumulation allows for faster carry and faster multiplication. Moreover, there are noticeable advantages for the implementation in a semiconductor circuit resulting from the regularity of the circuit structure. Time characteristics of the matrix multiplier composed of CSA circuits with the carry-related parameters Tc=2 and the sum Ts=4 for 4-bit multiplication is T = 19.

The third category of multipliers is based on a written multiplication algorithm adapted to the binary representation of arguments which is implemented in three steps as described in the publication by Jinimol P George et al. entitled "Wallace Tree Multiplier using Compressor" (International Journal of Current Engineering and Technology, Vol.5, No.3, June 2015) hereinafter referred to as "Jinimol's publication". The basis for the multiplication of 4-bit arguments is the determination of four partial products $\{a_3, a_2, a_1, a_0\}$, where $a_k = x_i * Y$ and addition

thereof taking into account the bit shift of generated components. Assuming that Y is a 4-bit argument $\{y_3, y_2, y_1, y_0\}$, four partial products with binary representation will be generated $a_k=\{x_i{}^*y_3, x_i{}^*y_2, x_i{}^*y_1, x_i{}^*y_0\}$ and

$$A = \sum_{k=0}^{n-1} 2^k a_k = \sum_{i=0}^{n-1} 2^i x_i * Y$$

and $Y=\{y_3, y_2, y_1, y_0\}$, then

$$A = X * Y = \sum_{i=0}^{n-1}\left(2^i x_i * \sum_{j=0}^{n-1} 2^j y_j\right) =$$

$$\sum_{i=0}^{n-1}\sum_{j=0}^{n-1} 2^{i+j}\left(x_i * y_j\right),$$

signals $x_i{}^*y_j$ can be generated simultaneously by a simple digital logic "AND" gate, and according to the Jinimol's publication above, it is the first step of producing a written multiplication result. Determined $x_i{}^*y_j$ components should be added taking into account the weight $2^{i+j}$ of individual bits representing the value of partial products $a_k$. The result of the multiplication of four-bit arguments is represented in eight bits $Z = \{z_7, z_6, z_5, z_4, z_3, z_2, z_1, z_0\}$, where the highest weight of the product $x_3{}^*y_3$ is $2^{3+3} = 2^6$, while the weight $2^7$ of bit $z_7$ results from taking into account the carry of the sum of bits $x_3{}^*y_2$ and $x_2{}^*y_3$ with weights of $2^5$, thereby generating a possible carry to the position with a weight of $2^6$ and the result $x_3{}^*y_3$ also with a weight of $2^6$, and therefore the sum of bits with weights of $(2^5+2^5)+2^6 = 2^{5+1}+2^6= 2^7$ is represented as an 8-bit binary number. The results of $(32+32)+64 = 128 = 2^7$ numbers confirm the obtained result. Therefore, the second step of written multiplication according to Jinimol's publication is to produce a result which takes into account the weights of individual products $x_i{}^*y_j$ and the carries resulting from their addition and reduction of the result representation to two values represented by signals with appropriate weights which will be added in a two-argument adder as described in Jinimol's publication.

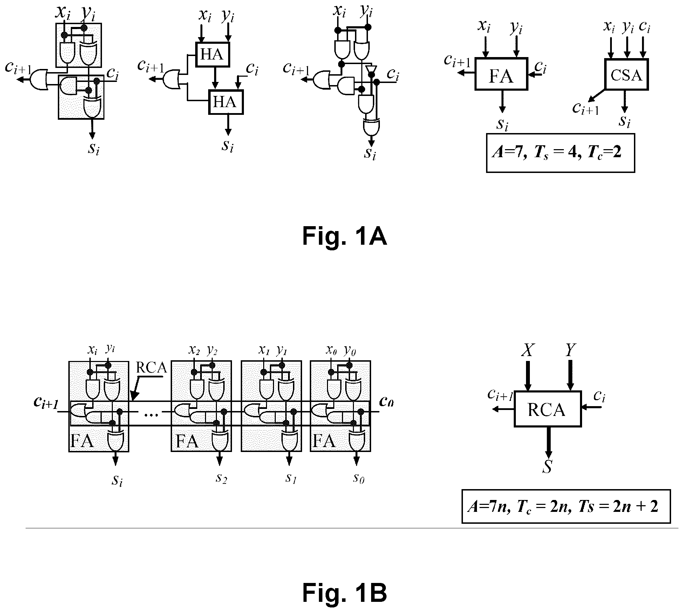

Diagrams of adders are shown in Fig. 1A and 1B. Fig. 1A shows connection networks of simple logic gates for a digital circuit implementing a one-bit full adder (FA) equivalent to the CSA adder, and AT characteristics, where Ts is T for the sum, and Tc is T for the carry. Fig. 1B shows connection networks of simple logic gates for a digital circuit implementing an n-bit ripple carry adder RCA and AT characteristics, where Tc is T for n-bit carry and Ts is T for n-bit addition, n specifying the number of bit positions of the RCA adder.

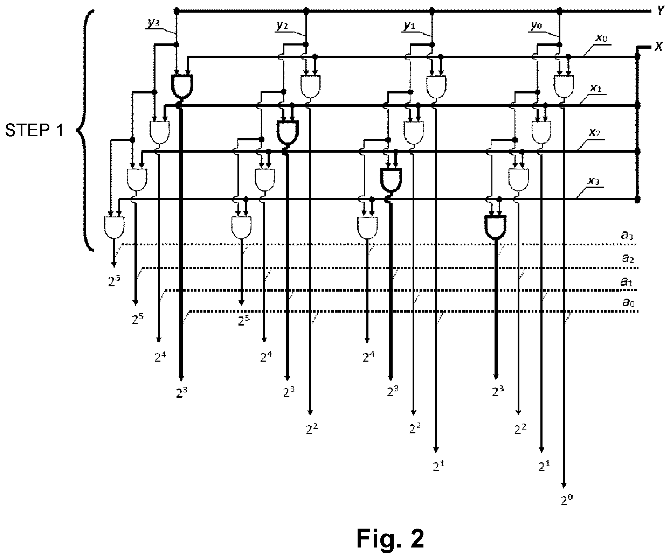

Fig. 2 is a diagram showing the use of simple "AND" logic gates according to the first step of Jinimol's publication to generate signals $x_i{}^*y_i$ for 4-bit arguments represented as signals along with their weights. As described in Fig. 2, there are: one product with a weight of $2°$, two products with a weight of $2^1$, three products with a weight of $2^2$, four products with a weight of $2^3$, three products with a weight of $2^4$, two products with a weight of $2^5$ and one product with a weight of $2^6$. As described

in Jinimol's publication, in the second step of multiplication using the written method, the resulting sixteen one-bit products shown in Fig. 2, wherein each bit has a specific weight, should be added or reduced to a form addable in a two-argument multiposition adder. The reduction is carried out with the use of digital circuits referred to as reducers, and according to Jinimol's publication, they can be reducers of various numbers of inputs to an appropriate number of outputs. In the implementation of fast multiplication, reducers of three inputs to two outputs are most often used as a 3: 2 reducer, most often with the FA circuit or CSA (Carry Save Adder) adders. A fast grouping and reduction of partial sums to two arguments in a tree structure of CSA adders was proposed in the publication by Christopher Stewart Wallace entitled "A suggestion for a fast multiplier" (IEEE Transactions on Electronic Computers, EC-13 (1): 14-17, February 1964). The third step of fast multiplication consists in adding signals with the same weights, reduced to two arguments in a two-element adder.

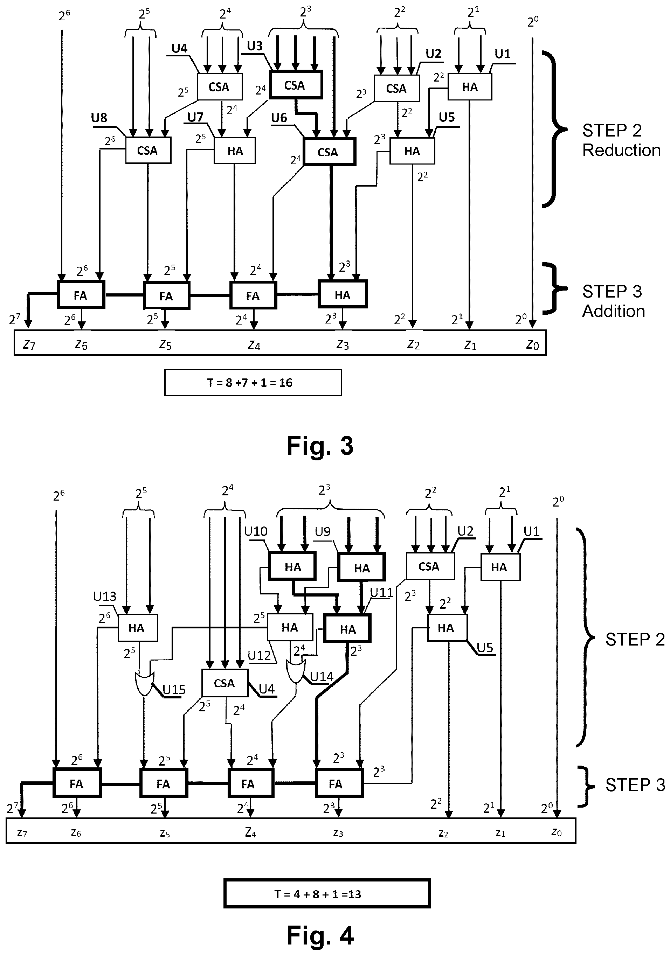

Fig. 2 shows partial products as signals $\{a_0, a_1, a_2, a_3\}$ represented by a dashed line, resulting from grouping the products of signals $x_i{}^*y_i$ produced by a simple "AND" logic gate. The multiplication system, according to the Jinimol's publication, in a three-level digital circuit based on a structure reducing the product values is shown in Fig. 3 which illustrates the second and third steps Minimum time characteristics of a 4-bit multiplier with the use of reducers based on CSA adders in a tree structure with final addition is characterised by a delay on the critical path of not less than T=16.

Fig. 3 shows a cascade of CSA adders in a 4-bit multiplier (with a 4:2 reduction on two CSAs being 3:2 reducers and the bold critical path for the cascade of T=15), for which the total delay taking into account the input products on the AND gate gives a cumulative delay of T=15+1=16.

The second step in determining the result is reducing the products of signals with the same weight to the signals of intermediate representation represented with two signals of the same weight. The weight of position $2^0$ is determined by an AND gate because it is the only signal representing the weight $2^0$ and it is the least significant bit of the multiplication result, represented by signal $z_0$ also referred to as the LSB (Least Significant Bit) result. Bit $z_0$ being the LSB of the result Z is the product of $z_0=x_0{}^*y_0$ implemented by a simple AND gate and is characterised by parameter T=1. Determination of signal $z_1$ with a weight of $2^1$ of the result $Z = \{z_7, z_6, z_5, z_4, z_3, z_2, z_1, z_0\}$ requires determination of the sum of two signals coming from two products $x_0{}^*y_1$ i $x_1{}^*y_0$ with weights of $2^1$ and can be realised in a U1 system which is an HA (Half Adder) at time Ts = 2 and Tc = 1. In such a solution, a result signal $z_1$ with a weight of $2^1$ at time Ts = 2 and a signal Tc of carry to the next bit position with a weight of $2^2$ with a delay time of Tc = 1, which is not directly a signal representing the result, are generated. When taking into account the carry signal from the U1 system with a weight of $2^1$ in determining the signal $z_2$ of the multiplication result, four signals with a weight of $2^2$ should be taken into account: one from the carry from U1 and three signals representing the results of products $x_0*y_2$, $x_1*y_1$, $x_2*y_0$ generated by AND gates also with a weight of $2^2$. Therefore, to determine the result signal $z_2$, the sum of four arguments with a weight of $2^2$ must be determined. Three signals with a weight of $2^2$ are input signals to U2 which is a 3:2 reducer on a CSA circuit. The U2 circuit reduces three signals with a weight of $2^2$ to two signals, of which one signal Ts with a weight of $2^2$ is generated at time Ts=4 and one carry signal Tc with a weight $2^3$ is generated at time Tc = 2. The output of signal Ts from the U2 circuit with a weight of $2^2$ is connected to the input of the half-adder HA marked as U5, to which the fourth signal with a weight of $2^2$ is connected. The output of the sum Ts of the U5 circuit will generate the result signal $z_2$ with a weight of $2^2$ with a delay of the connected U2 and U5 circuits with a total delay characteristics of T=4+2=6, it is also time characteristics for the signal $z_2$ of the result Z. The U2 and U5 circuits generate carries with weights of $2^3$ as shown in Fig. 3: one of signals Tc with a weight of $2^3$ from the U2 and one signal with a weight of $2^3$ from the U5 circuit. Taking into account additional, four more signals with weights of $2^3$ generated in the first step according to Fig. 2 by AND operations on signals $x_0*y_3$, $x_1*y_2$, $x_2*y_1$, $x_3*y_0$, in total there are six signals with a weight of $2^3$ that are to be added, and it is the largest number of signals with the same weight in a 4-bit multiplication circuit, which also affects the characteristics T generating the largest delay value to generate the multiplication result and it is a critical path for 4-bit multiplication. Addition of the six signals with a weight of $2^3$ is preferably performed in a fast 5:2 reduction circuit, and then addition of the signal with a weight of $2^3$ from the 5:2 reducer with the sixth signal with a weight of $2^3$, and it is preferable to do this in the third step of multiplication intended for multi-position two-argument addition as shown in Fig. 3. The 5:2 reducer for reducing signals with a weight of $2^3$ shown in Fig. 3 is composed of cascaded U3 and U6 circuits, three out of four output signals with a weight of $2^3$ from the first step, produced in AND products were delivered to the inputs of the U3 circuit, while the fourth one of the signals with a weight of $2^3$ from the first step and a carry signal from the U2 circuit as a fifth input signal to the 5:2 reducer were delivered to the U6 circuit. The sum output with a weight of $2^3$ from the U6 circuit is the output of the 5:2 reducer connected to one of the inputs of the first bit of the multi-position adder which performs the third step of multiplication. The sixth one of the signals with a weight of $2^3$ was connected to the second input of the first bit of the multi-position adder performing the third step of multiplication, being a carry signal from the U5 circuit was connected to the input of the third step being a multi-position two-argument adder. T characteristics of the 5:2 reducer composed of cascaded U3 and U6 circuits which determine the signal with a weight of $2^3$ is Ts = 4 + 4 = 8. According to the prior art shown in Fig. 3, determination of the result of multiplication requires taking into account the delay measured by parameter T for the third step which performs four-position addition. The four-position adder of the third step is composed of three FAs and one HA connected in series. Taking into account the delays Tc=2 for three FAs and one delay Tc=1 for HA, the delay measured by the T characteristics for the third step is T = 3*2+1=7. After adding up the maximum delays of the three steps, 4-bit multiplication is characterised by parameter T = 8 + 7+1 = 16.

From patent applications US2008/0243976, US2014/0253215, US2017/0161021, digital signal processing systems referred to as DSPs (Digital Signal Processors) are know which support in-circuit multiplication for signal processing and digital filtering. In US2008/0243976 reference is made to a multiplier circuit based on a matrix multiplication referred to as MAC (Multiply and Accumulate) as the most used and intended for DSP. Typical multipliers are composed of basic AND logic gates of the CSA matrix and the final CPA adder. Most frequently described implementation of multipliers uses CPA built on the basis of an ripple carry adder as connected-in-series single-position FA circuits, but it is also possible to use circuits faster than CPA for multi-position adders.

Patent application US2017/0161021 describes an 8-bit multiplier in a digital circuit with a Wallec tree structure using an unusual description of delay d = 1 corresponding to the standard delay d = 2T = 2 for an XOR gate. Then, according to Fig. 5, US2017/0161021, it should be taken into account for the 4:2 reducer that Ts = 6 = 3d (as in the publication by Mounir Bohsali et al. entitled "Rectangular Styled Wallace Tree Multipliers"), and for the 3:2 reducer implemented in CSA circuit, parameter Ts = 2d = 4 , as well as for HA, parameter Ts = d = 2. Moreover, the multiplier described in US2017/0161021 uses a 7:2 reducer called there in Fig. 10 a 7:2 counter with parameter Ts = 4d = 8. A 7:2 reducer in the CSA tree structure would describe parameter Ts = 5d = 10. This solution allowed obtaining the multiplication time for 8-bit arguments T = 14d = 28. Taking into account the 4:2 reducer circuits with a delay of $T_{4:2}$ = 6 and the delay of the 4-bit adder composed of four connected-in-series FAs being equal to 4*Tc = 8, the total delay of the 4-bit multiplier circuit would be not less than T = $T_{4:2}$+ 4*Tc = 8 + 8 = 16.

US2014/0253215 describes an in-circuit 8-bit system multiplication performed in two steps, where, based on time analysis of logic gates between inputs and an output for one step, T = 12. Therefore the two steps will require a delay of not less than T = 24.

In US2008/0243976 a solution for a multiplier of arguments in two's complement (U2) is based on a modified 4-bit multiplier matrix in the diagram shown in Fig. 1 of US2008/0243976 with the parameter T = 15 +1 = 16.

In the above-mentioned patents, 3:2 reducers were used, such as CSA adders, as well as dedicated 4:2 reducers and dedicated 5:3 and 7:3 or 7:2 reducers that do not differ in the T parameter from those presented in the description. Furthermore, implementations of multipliers of larger size, composed of 4-bit multipliers are presented. The fastest, measured by the number of basic gates on the critical path of the 4-bit multiplier solution, is characterised by a minimum delay of T=16. It is disadvantageous that in descriptions there are often irregular structures of logic blocks, which is disadvantageous for the implementation of the circuit in the semiconductor.

## SUMMARY OF THE INVENTION

Given the above considerations, it would be advisable to develop a digital multiplier that is simpler than those known so far.

In none of the solutions proposed so far, the specific relationship between the values of the signals has been used, which would make it possible to minimise the elements on the critical path and to obtain the T characteristics of a much lower value without increasing the number of gates which influence the size of the circuit. The size of the circuit is described by the A (Area) characteristics, wherein a simple gate, e.g. an AND gate, is characterised by $T = 1$ and $A = 1$.

The digital 4-bit multiplier according to the invention uses a relationship between the signals, allowing to obtain a higher (up to 20%) speed as measured by the T parameter for the 4-bit multiplier and features a regular structure.

The object of the invention is a digital 4-bit multiplying circuit with accelerated calculation, comprising interconnected sets of logic circuits for determining a result of multiplication in three steps, wherein a first set of logic circuits implementing a first step of multiplication receives, at an input, input signals representing bits $\{x_0, x_1, x_2, x_3; y_0, y_1, y_2, y_3\}$ of input arguments, and at an output provides four partial products $\{a_3, a_2, a_1, a_0\}$, a second set of logic circuits implementing a second step of multiplication reduces the partial products to a reduced form which, in a third set of logic circuits implementing a third step of multiplication, is added in two-argument multi-position adders, providing, at an output, an eight-bit multiplication result $Z = \{z_7, z_6, z_5, z_4, z_3, z_2, z_1, z_0\}$, characterised in that the second set of logic circuits includes the following set of circuits converting the input signals of the second set of circuits to the output signals of the second set of circuits:

- a direct connection between the input signal with a weight of $2^0$ and the output signal with a weight of $2^0$;
- a first circuit (U1) that is a half adder (HA), having two input signals with a weight of $2^1$ connected to its input, providing a sum output as the output signal with a weight of $2^1$;
- a second circuit (U2) that is a carry save adder (CSA), having three input signals with a weight of $2^2$

connected to its input,
- a third circuit (U5) that is a half adder (HA), having a carry output of the first circuit (U1) and a sum output of the second circuit (U2) connected to its input, providing a sum output as an output signal with a weight of $2^3$;
- a fourth circuit (U9) that is a half adder (HA), having two of the four input signals with a weight of $2^3$ connected to its input,
- a fifth circuit (U10) that is a half adder (HA), having two other of the four input signals with a weight of $2^3$ connected to its input,
- a sixth circuit (U11) that is a half adder (HA), having a sum output of the fourth circuit (U9) and a sum output of the fifth circuit (U10) connected to its input, wherein its output, along with a carry output of the second circuit (U2) and a carry output of the third circuit (U5) are provided as output signals with a weight of $2^3$;
- a seventh circuit (U12) that is a half adder (HA), having a carry output of the fourth circuit (U9) and a carry output of the fifth circuit (U10) connected to it;
- an eighth circuit (U14) that is an OR logic gate, having a sum output of the seventh circuit (U12) and a carry output of the sixth circuit (U11) connected to it, and providing an output as the first output signal with a weight of $2^4$;
- a ninth circuit (U4) that is a carry save adder (CSA), having three input signals with a weight of $2^4$ connected to its input, and providing a sum output as the second output signal with a weight of $2^4$, and providing a carry output as the first output signal with a weight of $2^5$;
- a tenth circuit (U13) that is a half adder (HA), having two of the four input signals with a weight of $2^5$ connected to it;
- an eleventh circuit (U15) that is an OR logic gate, having a carry output of the seventh circuit (U12) and a sum output of the tenth circuit (U13) connected to it, and providing an output as the second output signal with a weight of $2^5$;
- wherein the first output with a weight of $2^6$ is the carry output of the tenth circuit (U13), and the second output signal with a weight of $2^6$ is connected directly to the input signal with a weight of $2^6$.

The 4-bit multiplier according to the invention is characterised by a small value of the T parameter. Assuming by default that the T parameter describes a delay measured by a number of standard gates along the longest path of the signals that determine the results, this parameter is also referred to as the longest critical path. In the solution according to the invention, in the 4-bit multiplier, a specific relationship between the values of the input and output signals in the multiplier was used. This specificity covers one case of values of input arguments of the multiplication. However, the use of this specific relationship allows to implement a multiplier with a smaller number of logic gates on the critical path and to achieve the characteristics of T=13, i.e. nearly 20% faster than the solutions discussed in the background section.

## BRIEF DESCRIPTION OF DRAWINGS

The invention is illustrated by means of an embodiment in a drawing, wherein :

> Fig. 1A shows connection networks of simple logic gates for a digital circuit implementing a one-bit full adder FA equivalent to CSA adder and AT characteristics;
> Fig. 1B shows connection networks of simple logic gates for a digital circuit implementing an n-bit ripple carry adder RCA and AT characteristics;
> Fig. 2 shows an "AND" gate arrangement generating partial products $\{a_0, a_1, a_2, a_3\}$;
> Fig. 3 shows an example of step 2 and step 3 of known multiplication solutions;
> Fig. 4 shows a block diagram of an embodiment according to the invention of a 4-bit multiplier with acceleration of calculations, composed of the CSA, FA, and HA circuits and two logic OR gates described as U12 and U13.

## DETAILED DESCRIPTION

The present description presents a preferred embodiment of the invention. It should not, however, be interpreted restrictively, but merely as an example to illustrate generally the implementation of the solution according to the invention.

Signals, marked with lines in the drawings, refer to single or multi-bit signal lines.

Typically, CSA adders or reducers combined in a Wallece tree structure are used for fast in-circuit multiplication, as in a drawing in Fig. 3 discussed above.

Fig. 4 shows a diagram of the 4 -bit multiplier according to the invention, with acceleration consisting in "wired OR" addition or with the use of an OR gate of two mutually exclusive occurrences of simultaneous signals with weights of $2^5$, thanks to which it is possible to obtain the value T = 13.

In implementing the present invention, it has been noticed that a specific relationship between signals in the multiplier of 4-bit arguments exists for multiplication arguments of values X=15 and Y=15, for which the result of multiplication is Z =X*Y=15*15=225. Then, the input arguments for the multiplication are X=15 and Y=15, represented in binary terms as only "1s", that is, X={1,1,1,1} and Y={1,1,1,1}. For these values of the multiplication arguments, all AND gates performing bit multiplication $x_i{}^*y_j$ of the first step (as in Fig. 2) of determining the result of multiplication, have at the input a high state, i.e. logical "1", and at all outputs of products the output signals assume the logical value of "1". Then, the number of output signals from the products $x_i{}^*y_j$ representing different weights, as shown in Fig. 2, is for the following weights, respectively: one signal with a weight of $2^0$, two signals with a weight of $2^1$, three signals with a weight of $2^2$, four signals with a weight of $2^3$, three signals with a weight of $2^4$, two signals with a weight of $2^5$, one signal with a weight of $2^6$.

It has been noticed that for the special case of argument values, all output signals from the first step have a value of "1", therefore when all of the four products $x_0{}^*y_3, x_1{}^*y_2, x_2{}^*y_1, x_3{}^*y_0$ with weights of $2^3$ have a value of "1", then three products $x_1{}^*y_3, x_2{}^*y_2, x_3{}^*y_1$, with weights of $2^4$ take a value of "1" and two products $x_2{}^*y_3, x_3{}^*y_2$ with weights of $2^5$ also take a value of "1", because at the output of the sum of a weigh of $2^5$ from the U13 circuit which is HA there must be "0" which without unnecessary delay increasing the T parameter and extending the critical path of multiplication can be added with "wired OR" or with the use of an OR gate, as shown in Fig. 4 with a carry output with a weight of $2^5$ from the U12 circuit. In the presented solution, the products represented by the signals with a weight of $2^3$ are reduced in parallel in the U9 and U10 circuits, the sum outputs of which are connected to the inputs of the U11 circuit which will generate one of the sums with a weight of $2^3$ connected to the multi-position adder of the third step of multiplication. The U9, U10 and U11 circuits are HA adders and the total delay of generating the signal representing the sums with a weight of $2^3$ is T = 2+2 =4. Preferably, in the circuit shown in Fig. 4, the total delay of the multiplier being the sum of the delay of the first step being T = 1 and the second step with T = 4, and the third step resulting from the delay of the multi-position four-position adder being T = 4*FA =4*2=8, is T=4+8+1=13. Thus, the obtained delay is nearly 20% lower than other known solutions described in the introduction.

The present invention minimises the number of logic states in the critical path of the 4-bit digital multiplier. Accordingly, the invention provides a useful, concrete, and actual result.

The present invention is applicable in digital filtering systems and arithmetic logic circuits of microprocessors for fast multiplication and processing of signals.

Although the invention has been presented in the drawings and description with reference to preferred embodiments, these embodiments do not imply any limitations on the present invention. It is obvious that changes can be made without departing from the spirit of the invention. The disclosed preferred embodiments are illustrative only and do not exhaust the scope of the present invention.

Accordingly, the scope of protection is not limited to the preferred embodiments described, but is limited by the appended claim.

## Claims

1. A digital 4-bit multiplying circuit with accelerated calculation, comprising interconnected sets of logic circuits for determining a result of multiplication in three steps, wherein a first set of logic circuits implementing a first step of multiplication receives, at an input, input signals representing bits $\{x_0, x_1, x_2, x_3; y_0, y_1, y_2, y_3\}$ of input arguments, and at an output provides four partial products $\{a_3, a_2, a_1, a_0\}$, a second set of logic circuits implementing a second step of multiplication reduces the partial products to a reduced form which, in a third set of logic circuits implementing a third step of multiplication, is added in two-argument multi-position adders, providing, at an output, an eight-bit multiplication result $Z = \{z_7, z_6, z_5, z_4, z_3, z_2, z_1, z_0\}$, **characterised in that** the second set of logic circuits includes the following set of circuits converting the input signals of the second set of circuits to the output signals of the second set of circuits:

- a direct connection between the input signal with a weight of $2^0$ and the output signal with a weight of $2^0$;
- a first circuit (U1) that is a half adder (HA), having two input signals with a weight of $2^1$ connected to its input, providing a sum output as the output signal with a weight of $2^1$;
- a second circuit (U2) that is a carry save adder (CSA), having three input signals with a weight of $2^2$ connected to its input,
- a third circuit (U5) that is a half adder (HA), having a carry output of the first circuit (U1) and a sum output of the second circuit (U2) connected to its input, providing a sum output as an output signal with a weight of $2^3$;
- a fourth circuit (U9) that is a half adder (HA), having two of the four input signals with a weight of $2^3$ connected to its input,
- a fifth circuit (U10) that is a half adder (HA), having two other of the four input signals with a weight of $2^3$ connected to its input,
- a sixth circuit (U11) that is a half adder (HA), having a sum output of the fourth circuit (U9) and a sum output of the fifth circuit (U10) connected to its input, wherein its output, along with a carry output of the second circuit (U2) and a carry output of the third circuit (U5) are provided as output signals with a weight of $2^3$;
- a seventh circuit (U12) that is a half adder (HA), having a carry output of the fourth circuit (U9) and a carry output of the fifth circuit (U10) connected to it;
- an eighth circuit (U14) that is an OR logic gate, having a sum output of the seventh circuit (U12) and a carry output of the sixth circuit (U11) connected to it, and providing an output as the first output signal with a weight of $2^4$;
- a ninth circuit (U4) that is a carry save adder (CSA), having three input signals with a weight of $2^4$ connected to its input, and providing a sum output as the second output signal with a weight of $2^4$, and providing a carry output as the first output signal with a weight of $2^5$;
- a tenth circuit (U13) that is a half adder (HA), having two of the four input signals with a weight of $2^5$ connected to it;
- an eleventh circuit (U15) that is an OR logic gate, having a carry output of the seventh circuit (U12) and a sum output of the tenth circuit (U13) connected to it, and providing an output as the second output signal with a weight of $2^5$;
- wherein the first output with a weight of $2^6$ is the carry output of the tenth circuit (U13), and the second output signal with a weight of $2^6$ is connected directly to the input signal with a weight of $2^6$.

# Fig. 1A

# Fig. 1B

**Fig. 2**

**Fig. 3**

**Fig. 4**

Europäisches
Patentamt

European
Patent Office

Office européen
des brevets

## EUROPEAN SEARCH REPORT

Application Number

EP 20 46 1542

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2008/243976 A1 (WIENCKE CHRISTIAN [DE]) 2 October 2008 (2008-10-02) * paragraph [0048]; figure 1 * | 1 | INV. G06F7/53 |
| A | SUNDHAR A ET AL: "Performance Analysis of Wallace Tree Multiplier with Kogge Stone Adder using 15-4 Compressor", 2019 INTERNATIONAL CONFERENCE ON COMMUNICATION AND SIGNAL PROCESSING (ICCSP), IEEE, 4 April 2019 (2019-04-04), pages 903-907, XP033541156, DOI: 10.1109/ICCSP.2019.8697981 [retrieved on 2019-04-23] * section II, III * | 1 | |
| A,D | Jinimol P George ET AL: "Wallace Tree Multiplier using Compressor", International Journal of Current Engineering International Journal of Current Engineering and Technology, 1 June 2015 (2015-06-01), XP055748006, Retrieved from the Internet: URL:https://inpressco.com/wp-content/uploads/2015/06/Paper801934-1938.pdf [retrieved on 2020-11-09] * section 2-6 * | 1 | TECHNICAL FIELDS SEARCHED (IPC)  G06F |
| A | US 5 146 421 A (ADILETTA MATTHEW J [US] ET AL) 8 September 1992 (1992-09-08) * column 8, line 3 - column 11, line 38; figure 5 * | 1 | |

The present search report has been drawn up for all claims

| Place of search | Date of completion of the search | Examiner |
|---|---|---|
| Munich | 13 November 2020 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 46 1542

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2020

| Patent document cited in search report | | Publication date | Patent family member(s) | | Publication date |
|---|---|---|---|---|---|
| US 2008243976 | A1 | 02-10-2008 | DE 102007014808 | A1 | 02-10-2008 |
| | | | EP 2140345 | A1 | 06-01-2010 |
| | | | US 2008243976 | A1 | 02-10-2008 |
| | | | WO 2008116933 | A1 | 02-10-2008 |
| US 5146421 | A | 08-09-1992 | CA 2015706 | A1 | 28-12-1990 |
| | | | EP 0405723 | A2 | 02-01-1991 |
| | | | JP H03116326 | A | 17-05-1991 |
| | | | US 5146421 | A | 08-09-1992 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080243976 A
- US 20140253215 A
- US 20170161021 A

**Non-patent literature cited in the description**

- **JINIMOL P GEORGE et al.** Wallace Tree Multiplier using Compressor. *International Journal of Current Engineering and Technology,* June 2015, vol. 5 (3
- **CHRISTOPHER STEWART WALLACE.** A suggestion for a fast multiplier. *IEEE Transactions on Electronic Computers,* February 1964, vol. EC-13 (1), 14-17